(19)

Europäisches
Patentamt
European
Patent Office
Office européen
des brevets

(11) **EP 1 940 128 A2**

(12) **EUROPEAN PATENT APPLICATION**

(43) Date of publication:
**02.07.2008 Bulletin 2008/27**

(51) Int Cl.:
***H04L 29/08*** *(2006.01)*

(21) Application number: **07150141.5**

(22) Date of filing: **19.12.2007**

| | |
|---|---|
| (84) Designated Contracting States: **AT BE BG CH CY CZ DE DK EE ES FI FR GB GR HU IE IS IT LI LT LU LV MC MT NL PL PT RO SE SI SK TR** Designated Extension States: **AL BA HR MK RS** | (71) Applicant: **ECI Telecom Ltd.** **49517 Petach Tikva (IL)** |
| (30) Priority: **21.12.2006  IL 18023006** | (72) Inventor: **Zeira, Assaf, Mr.** **Bnei Atarot 60991 (IL)** (74) Representative: **Modiano, Micaela Nadia et al** **Modiano Josif Pisanty & Staub Ltd** **Thierschstrasse 11** **80538 München (DE)** |

(54) **Method for downloading data files to a group of clients via a proxy with a limited storage**

(57)    A method is described for downloading a plurality of files to a group of clients from an outside source via an intermediate memory IM having a limited capacity, The method comprises monitoring a current condition of each of the clients to determine there-among a starving client SC being the client maximally close to a starving condition, i.e. having the largest difference between the client's remaining download volume V and the queued download volume Q currently available in the IM for that client. The method further comprises adding, to the Q of the SC in the IM, file(s) still required for the SC.

FIG.1

**EP 1 940 128 A2**

## Description

### Field of the invention

The present invention relates to the field of providing a number of clients or subscribers with copies of digital files via a proxy, such as a server having a limited storage.

### Background of the invention

The problem of providing a number of subscribers with a bulk of data from a common location is discussed in the prior art at least for the following two implementations: downloading information for a number of peers in a network, and upgrading software used by a group of subscribers connected to one and the same provider or server.

An International patent application WO05117386A1 relates to a method and a system for digital content sharing between individual users in a peer-to-peer fashion, wherein each user is connected to a respective local access network through a transport network. The method and system are characterized by providing local network storage areas associated to each user and arranged for archiving digital contents, and by carrying out the transferring of contents via the transport network from a storage area associated to a user holding requested contents to a remote network storage area associated to a requesting user on a different access network, according to the connectivity available on the transport network. The shared contents are made available for access by the requesting user on its local network storage area.

A Chinese patent application CN1567843A discloses an automatic software-upgrading method, where a terminal device cooperates with a local end device to connect a user terminal to the network. The terminal device reports current software version information, the terminal management unit judges if the software of the terminal device needs to be upgraded: if it does, an upgrading command is sent to the terminal device and the terminal's software is used to download the required software to complete the upgrading.

An article "On resource allocation for multiple bearer services in UMTS supporting reconfiguration" (Abou-Jaoude, Roger /Siemens Mobile/; Dawy, Zaher; Mohyeldin, Eiman; Luo, Jijun; Dillinger, Markus, published by Delson Group Inc. in the Proceedings of 5th World Wireless Congress, 2004, p 652-656) discusses adequate and reliable software downloads in reconfigurable systems. The paper investigates downloading software by using different bearer channels in a UMTS network supporting reconfiguration. The paper considers dedicated channels, common channels and shared channels. The power consumption of each of the channels is formulated and investigated, with respect to the provided throughput, in order to choose the best data bearer. Power at the base station is proven to be the bottleneck on the downlink of asymmetric services. Dedicated channels have power needs increasing exponentially with the number of users, common channels depend on the reporting subgroup and are less dependent on the number of users, whereas shared channels are divided between throughput performance and service fairness depending on the scheduling used. When all three channels coexist, the overall power needs at the base station increases in an exponential way, and the coexistence is formulated with a prioritization based solution.

Automatic software upgrade is a critical phase of any running system, and especially if the upgrade should incur the minimal download time. Automatic software upgrade is even more critical to a system with multiple clients that should complete downloading in a limited time-frame. It becomes a complicated logistical problem to upgrade simultaneously thousands of sub-systems. In such cases, minimizing the download time becomes very important for the success of the upgrade process. The problem becomes even more complex when the download must be performed in two phases; in the first phase, data files are downloaded into an intermediate memory (such as a proxy server, a main processing card), and in the second phase the files are downloaded from that intermediate memory to the clients (say, from the main card to a number of subtending cards). Each of the subtending cards may require different set of files and the sets may be partly disjoint; that is, some cards may require the same file.

From a computational point of view this problem is trivial if the capacity of the intermediate memory is sufficient to contain all the files that are required by the clients. Even with the limited storage of the intermediate memory, the problem is rather simple if all the clients require one and the same set of files and are able to download the files in parallel and with similar rates. The problem is intricate and difficult to compute when the intermediate memory is fairly limited, and/or sets of files required by the clients differ from one another, and/or the clients have different downloading rates. In such cases, the intermediate memory might not be able to fulfill demands of all the clients. The clients in turn cannot download a file unless it resides (in full) in the intermediate memory; and if none of the files required by the client are in the intermediate memory, it would turn idle, risking the progress of the entire process. Such an intermediate memory therefore becomes a bottleneck in the described process.

An intuitive way to cope with such a problem is using the known Knapsack approach. In this approach the algorithm tries to find the set of files that would best fit in the intermediate memory. The fitting criteria can be defined by some heuristics. Whenever the occupancy of the intermediate memory gets below a certain threshold the knapsack is run again to fit another set of files into the free space. This approach is fairly complex since is based on the knapsack algorithm that is complex itself. Moreover, the files inserted in the intermediate memory, while perfectly fitting the memory space, may appear to be not the files that are urgently needed by the clients at the current moment.

To the best of the Applicant's knowledge, the above problem of a bottleneck has not been adequately resolved in the prior art.

**Summary of the invention**

As has been mentioned above in the background description of the invention, an intermediate memory having a limited capacity becomes a bottleneck in any process of downloading there-through a bunch of digital files to a number of clients/subscribers.

It is therefore an object of the present invention to resolve the problem by downloading data files in a carefully planned order so that to minimize the overall download time.

The above object can be achieved by providing a method for downloading a plurality of files to a group of clients from an outside source via an intermediate memory IM (a server, a main card, etc.) having a limited capacity insufficient for simultaneously storing all of the mentioned plurality of files though sufficient for storing at least the greatest file of the plurality; the method provides downloading of files, required by each specific client, to corresponding clients via said IM, and comprises:

- monitoring a current condition of each of the clients to determine there-among a client maximally close to a starving condition ( can be called a starving client SC or a most-under-queued client MUQC), the SC being currently characterized by a maximal value of $(V-Q)K$, wherein
$V$ is a remaining download volume being a volume of files out of the plurality of files, required by and not yet downloaded to a specific client,
$Q$ is a queued download volume being a volume of files out of the plurality of files, required by the specific client and currently present in the intermediate memory IM;
$K$ is a coefficient;
- upon determining the client SC, inserting in the IM from the outside source at least one additional file required by the SC, if not already present in the IM and whenever a suitable space in the IM becomes available.

For cases when downloading rates of clients of the group are substantially similar, values of the coefficient $K$ can be considered to be equal for all the clients, or even to be equal to $l$. In cases when downloading rates of the clients sufficiently differ from one another, values $(V-Q)$ of different clients should be normalized, and the coefficient $K=l/R$, where R is a downloading rate of a specific client.

The proposed method is more effective if only a single additional file is inserted in the IM whenever required and possible. In this case the algorithm becomes a so-called greedy algorithm which takes care of the most problematic client at a time (each time it becomes possible) by inserting only one and no more additional files required for that client (since the 2nd, 3rd etc. additional files might be required only by that client and not by other clients which may become starving soon); by inserting only one file at once the algorithm leaves a possibility that whenever (say, next time) a different client is considered the starving client, the IM will be able to urgently accommodate an additional file required for this different client.

The proposed algorithm is simple, yet efficient.

The method is based on the Author's observation that

a) the larger the remaining download volume V, the longer the download time for the client;
b) the larger the queued download volume Q, the safer is the client from starvation (i.e., being idle with no files to download).

The Author has come to a conclusion that, picking each time the client with the largest difference between the remaining download data volume V and the queued download data volume Q, and timely adding for this client (i.e., into its Q in the IM) file(s) still to be downloaded makes sure that this client would not starve.

The proposed method comprises continuing the substantially concurrent downloading files from the IM to the clients up to downloading each of said plurality of files to each one of the clients requiring said file.

According to additional aspects of the invention to be protected, there are further provided:

- a software product comprising computer implementable instructions and/or data for carrying out the above-described method;
- a carrier medium accommodating the software product;
- a control processing unit capable of implementing said method;

- an intermediate memory IM for downloading via it a plurality of files to a group of clients from an outside source, wherein the IM having a limited capacity and being equipped with the mentioned software product, for example in the form of a control processing unit CP residing in the IM.

**Brief description of the drawings:**

The invention will be further described with reference to the following non-limiting drawings in which:

**Fig. 1** is a simplified block diagram of a system suitable for performing the method proposed in the invention.
**Fig. 2** schematically illustrates a step-like character of freeing the intermediate memory IM when serving a group of clients.
**Fig. 3** schematically illustrates an exemplary graph of current downloading status of a group of clients.
**Fig. 4** is a simplified flow chart of the proposed algorithm of the proposed method.
**Figs. 5a to 5j** schematically illustrate phases of the proposed algorithm.

**Detailed description of the invention**

As has been mentioned in the summary, the method for downloading a plurality of files to a group of clients from an outside source via an intermediate memory IM having a limited capacity comprises monitoring a current condition of each of the clients to determine there-among a starving client SC being the client maximally close to a starving condition, i.e. having the largest difference between the client's remaining download volume V and the queued download volume Q currently available in the IM for that client; the method further comprises adding, from the outside source to the Q of the SC in the IM, one or more files still required for the SC.

The method formulated above is essentially efficient if clients require downloading of different but partially overlapping sets of files, which is the most usual case in practice. Indeed, in large computer or telecommunication systems clients are usually different, while most of them usually require common basic files to be downloaded, though almost each of them needs a number of specific/individual files.

The downloading of the files in the method is substantially concurrent, i.e. downloading of a number of files from the IM to a number of the clients is allowed in parallel.

It should be understood that any one of the files mentioned in the frame of the present application and in the above formulated method in particular, is a file currently belonging to said plurality of files to be downloaded to the group of clients via the IM, and the files of the plurality are all digital data files and may include information files, software files, configuration files, etc.

In a more detailed version, the above-proposed method preferably comprises the following preliminary steps:

- registering clients of said group, wherein the registration includes obtaining information about clients and files required by each specific client,
- creating working data bases for monitoring status of the clients, the files and the intermediate memory IM to enable control of the downloading process and to ensure that each of the files of the plurality was inserted in the IM (and only once), and that each of the clients has finally obtained all the files it required.

More specifically, the working data files preferably include a data base of the clients, a data base of the plurality of files, data bases of files required by each specific client, a data base of files currently inserted in the intermediate memory IM, a per file data base (list) of clients requiring a specific file currently inserted in the IM; a per client data base (Queue) of files required by each specific client, out of those currently inserted in the intermediate memory IM, a per client data base (Volume) of files required by each specific client and not yet downloaded to the specific client.

The method can be performed under control of a Central Processing unit (CP), preferably residing in the intermediate memory IM.

The above-mentioned data bases are formed in the CP, for example in the form of linked lists presenting queues, counters and the like.

In practice, the CP comprises, *inter alia,* a group of Queues for the respective group of clients, wherein each of the Queues comprises a list of none or more of the files currently inserted in the IM and required by a specific client; each of the Queues being capable of computing a value Q of current total volume of those files; and a group of counters for each of the clients, wherein each of the counters being capable of computing a list of none or more of the files still required to be downloaded to a specific client, and a value V of current total volume of such files.

More complete information about different data bases created in the CP will be further presented in the detailed description.

The method may comprise a preliminary step of inserting in said IM none or more of the discussed plurality of files.

That preliminary step has the meaning that the above-mentioned operation of monitoring the clients' downloading condition and selecting the starving client SC can be started either a) before any file is inserted in the IM, or b) after some of the files of said plurality are already inserted in the intermediate memory (say, in a random manner, so that the downloading process has probably started). In case (a), the IM will be initially filled with files most suitable for serving the client(s) initially susceptible to the starving condition (say, those having a great value of V i.e., requiring a lot of large files).

It should be understood that the method comprises downloading, substantially permanently performed, of the files currently present in the IM to the clients respectively requiring these files.

For implementing the step of inserting at least one additional file to the IM, the method preferably comprises:

- checking whether any of the presently inserted files has already been downloaded to all clients requiring that file, and if in the affirmative, removing that file from the IM thereby freeing a space for additional files to be inserted; determining whether any additional file required by said SC can be inserted in the IM, and if in the affirmative, selecting and inserting a suitable file in the IM.

The above-mentioned step of checking can be triggered each time when a specific client terminates the downloading of a particular required file from the IM; it is the time to verify whether that specific client was the last client in a list of clients which required download of that particular file.

The step of selecting a suitable file can be performed in many various ways. First of all, if there is a file still required by the SC and that file is absent in the IM, it must be some-when inserted in the IM from the outside source. The main conditions of the suitable file are that a) it is required by the SC and b) it suits the currently available space in the IM. If it does not suit, selection and insertion of a suitable file will be delayed until more space is freed in the IM.

A further criterion for selecting the additional file to be inserted may be, for example, the maximal possible number of clients in addition to the SC, which also need that file.

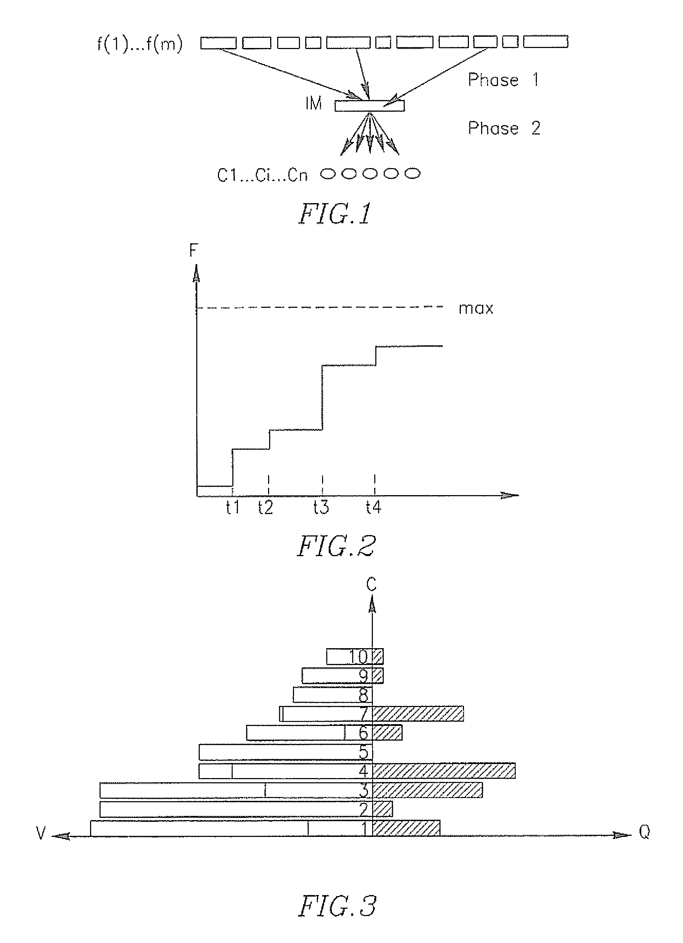

**Fig. 1** illustrates a schematic configuration of an exemplary system suitable for implementing the proposed method.

The system is composed of one main card - let it be called Intermediate Memory IM - and n subtending cards for a group of clients C1... Ci... Cn. Each of the subtending cards (referred here as clients) requires a set of files locally (inside its non volatile storage) in order to boot and work properly. Each client may require a different subset of files out of a plurality of files f(1) ... f(m) and the subsets are not necessarily disjoint; that is, some clients may require the same subsets of files. The download is a two-phase process. The files are inserted (the first phase) to an intermediate memory (IM) that is in the main card, and from there they are downloaded (the second phase) to the appropriate clients.

**Assumptions and extreme conditions:**

**IM size.** The size of IM is far too small to contain all system files and it is therefore referred also as the bottleneck. However, note that IM size cannot be smaller than the size of the largest system file.

**Clients variability.** The problem is obviously trivial if all clients are identical; that is if all clients require the same set of files. The problem becomes more and more difficult as the sets differ. The two above-mentioned extreme conditions are in fact related; the problem is greatly simplified if the download to the clients is done in parallel, and this can be achieved with a large IM or with clients that share similar files.

The method proposed in the present application is suitable for any combination of extreme conditions and is most efficient for systems where the Intermediate Memory IM has a limited capacity and where multiple clients require different though overlapping sets of files. The clients may have different downloading rates.

**Removing files from IM.** A file may be removed from IM only when the clients that require it had finished downloading it.

**Order of download.** Various strategies can be chosen for the order in which files are downloaded to a client. The simplest one is the order of insertion (determined by $\pi$). So if file A was inserted to IM before file B then A will also be downloaded before B. Other strategies could be also be chosen, for example, a download order that would enable to remove as many files as possible from IM.

**Size of files.** The files may be of different sizes (the files may represent software images, configuration files, data files or other). There are no constraints on the size of files; the sizes may vary considerably.

**Concurrent download.** Several clients may download files concurrently from IM. It is assumed that the main card is capable of feeding all clients simultaneously (there is no constraint on the overall egress bandwidth of the main card).

**Download time.** Download time is proportional to file size and the proportion factor depends on the client; that is, each client may have a different factor (different download bandwidth).

Client registration. A new client may introduce itself to the system (register) any time while the process is running. The clients may not change their file dependency (the number and the list of required files) during the process. When the client registers it should provide the list of files that it requires for bootstrap.

**Minimization function.** The purpose of the algorithm is to minimize the overall download time. The overall download time is defined from the time the first client started download its first file to the time the last client had completed to download all files.

Formally, the download time of a client, Tclient, is the time period from the time the first file started download (Tstart) to the time the last file finished download (Tend). It is easy to see that Tstart and Tend (and therefore also Tclient) depend on $\pi$, being the order at which files are inserted to IM. The overall download time, T, is defined as the time period from the time of the minimal Tstart to the time of maximal Tend. Since Tstart and Tend are functions of $\pi$, T is also a function of $\pi$.

$$Tclient(\pi) = Tend(\pi) - Tstart(\pi) \tag{1}$$

$$T\min = \min_{i=1}^{n}\{T_{start}^{i}(\pi)\} \tag{2}$$

$$T\max(\pi) = \max_{i=1}^{n}\{T_{end}^{i}(\pi)\} \tag{3}$$

$$T(\pi) = T\max(\pi) - T\min(\pi) \tag{4}$$

**Fig. 2** illustrates the character of freeing the space in the intermediate memory IM. Given a certain permutation $\pi$ of the system files defining their order of insertion into the bottleneck IM, the problem is deterministic. In other words, given that permutation, it is possible to compute in advance the time at which each client would start and finish downloading all files, and therefore it is possible to compute in advance the overall download time T. Finding the permutation that will give the optimal T, however, is a very difficult problem to compute since it requires going over all possible permutations ( which seems like a NP-hard problem). Therefore some approximations should be devised to enable simple computation of a permutation that will provide a sub optimal T. These approximations are based on the following observations. 1. It is easy to see that it is possible to compute the time when an IM file is exhausted (i.e., when all clients had completed its download). Since the order at which a client downloads IM files is known, the download rate of the client is also known, this makes possible to compute the time at which a client would start and finish downloading a file. Repeating this computation for all clients would give the exhaustion time of a file. As a consequence, it is possible to predict a value of F, being the amount of free space in the IM, at any time in the future.

Fig. 2 shows F assuming that new files are no longer inserted to IM. At time $t_i$, i = 1,2,3,4, a file was exhausted and removed from IM and the occupancy of IM decreased. F is obviously a step function.

2. Referring to figure 2, at $t_1$ F increased and some new file(s) could be inserted to IM. It might be however that there is no sense in doing so (inserting new files to IM at $t_1$), since the free IM memory would only allow for very small files to fit in that space. It might be worthwhile to wait for $t_2$ or even for later events to allow larger files to fit in that space. On the other hand, waiting too long might turn some clients idle (starved). The algorithm should therefore look for several steps ahead and choose the right time to insert new files (note that a greedy algorithm that always inserts a file at $t_1$ would result in fitting smaller and smaller files into a space that becomes smaller and smaller). The other related problem is which files to insert. The algorithm should pick the "best" files that would fit in F. This problem can be reduced to the known knapsack problem, and the criteria for "best" could be determined by various heuristics. Additional observations related to the method will be discussed with reference to Fig. 3.

**Fig. 3** shows an exemplary graph of current downloading status of a group of clients.

Fig. 3 illustrates the Author's s observation related to V and Q (the client remaining download volume V and the corresponding queued volume). The client with the largest V (let it be called maximal download volume client MDVC) is constraining the entire process. If this client remains idle with no files to download, then the overall download time T increases. So MDVC in fact defines the lower bound T0 for T (obviously the time it takes to download the files to all clients cannot be less than the time it takes to download the files to one specific client, MDVC in this case). On the other hand, clients that have a large queued volume Q would never get idle (never get starved). Therefore the clients that have a large V should also have a large Q; this way the constraining clients would never get idle, ensuring the optimality of T. Fig. 3 shows a group of ten different clients 1-10 that are currently characterized by their download volume V (boxes to the left of the vertical axis C) and each have a different Q (boxes to the right of the vertical axis marked C). Clients 5 and 8 in this example are already idle. Client1 in this example has the largest V (MDVC=1) but its Q is fairly large compared to client2. Unless new files are added to client 2 it might run out of work and get idle. It is ok for client 2 to get idle since that client1 is MDVC and even if all clients work at full capacity client 2 will remain idle waiting for client 1 to complete its download. However, if client 2 gets idle for more than (V1-V2) then it would become the new constraining client, replacing client 1.

The most under-queued client or a client approaching to starvation (let it be called MUQC or SC) would become the next constraining client unless it is "fed" with more work (provided with more files inserted in its queue in the IM). As indicated above the constraining client is the client with maximal download volume V, and it is therefore the client that will determine the lower bound for the download time T. The MUQC (= SC) is identified by the maximal value of V-Q. In the figure below, although clients 9 and client 10 have the minimal Q, client 2 is the most under-queued client (after client 2 come 1, 5, 3, 6, 8, 9, 10, 4, 7, in descending order).

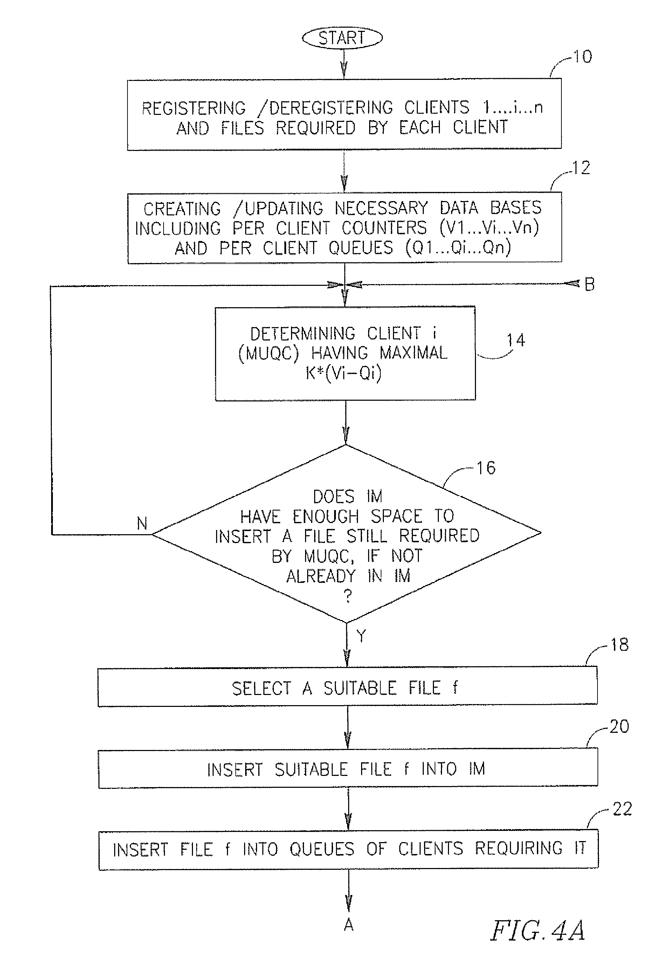

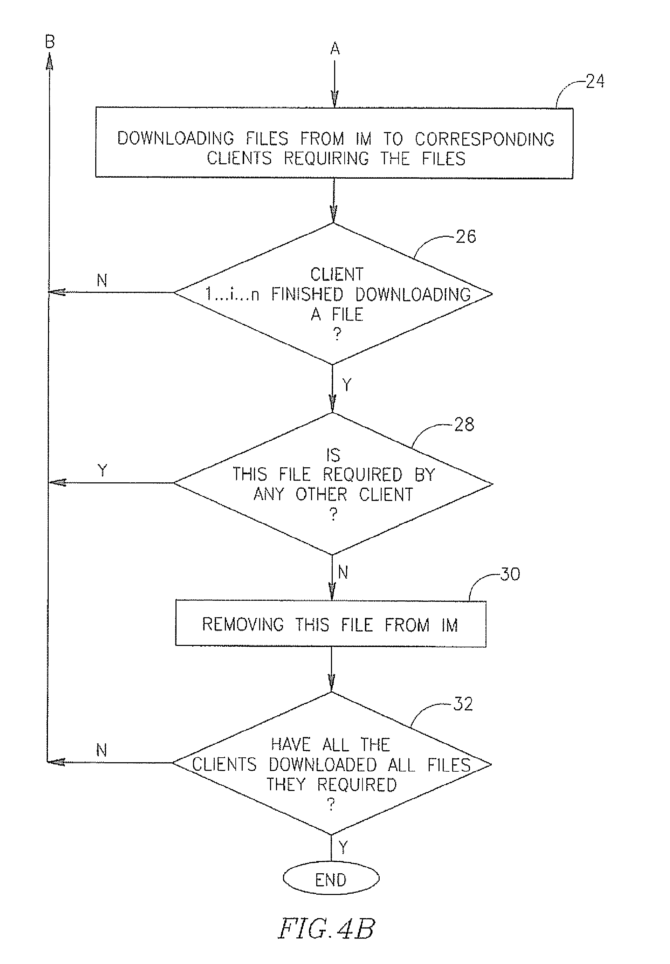

**Figs. 4a and 4b** illustrate a simplified flow chart of the proposed method.

It should be mentioned that the algorithm requires initial steps of registering clients (box 10) and creating a number of working data bases (box 12) in the Central Processing unit, for controlling the downloading process. The most important data bases are as follows:

**"file"** This data-structure contains information such as name, size and the list of dependent client.

**"clients"** This is a per-file data-structure. It contains a list of clients that depend on the file. The list is updated whenever a new client is registers and has this file in its files, or whenever a client completes to download this file.

**"client"** (counter of files for a client).This is a per-client data-structure that contains information such as the list of files on which this client depends on, the queue of files that are waiting for download, the remaining download volume V of this client (derived implicitly from the files list), and download rate. This makes the data structure interleaved; a file owns a set of clients and each client in turn owns a set of files.

**"files"** This is a per-client data-structure. It contains a sorted list of files that remain be downloaded for that client. The list is a linked list and it is sorted by file size. The list is updated whenever the client completes to download a file.

**"queue"** This is a per-client data-structure. It contains a list of files that are pending in the queue of a client, waiting to be downloaded. As indicated in the assumptions above these files are necessarily in IM. This data structure may produce the volume Q of the files pending in the queue.

**"IM"** This data-structure contains the list of files that are currently in IM.

Figs. 4a and 4b illustrate one possible and simplified version of the proposed method. The flow chart is of a so-called greedy algorithm that attempts to urgently satisfy the most under-queued client (MUQC). Such a client can also be called a client approaching to starvation (SC). The algorithm waits until this client starves (or just about to starve) and feeds it with inserting an additional file in the IM to download. Once this client is satisfied, another client might become the most under-queued one, and in this way the process continues until all the clients are satisfied and complete to download all the files.The greedy strategy is preferred here, since it allows to urgently handle the problems of the most critical client, while not losing control on other clients. As indicated above, MDVC determines T0 - the lower bound for T. It might be, however, that MDVC has a large Q and there is no point in focusing only on this client. There might be another client ( c') with a slightly lower V that is about to get starved. Unless c' gets some new files to download, it might become the new MDVC. The algorithm should therefore shift the focus to c' knowing that MDVC queue is loaded. This way the algorithm has in fact the ability to foresee a problem with another client; client that might risk T0 in the near future. So knowing that current constraining client has been taken care of indirectly, the algorithm can take the time to handle the next potential constraining client.

Unlike the knapsack approach that tries to fit as many files into F, this algoritlun preferably fits one file at a time. It might be that IM is almost empty; still, the algorithm does not attempt to fit in more than one file at a time. It focuses on achieving the lower bound T0 and not on fitting as many files to IM. So it is greedy with respect to choosing the file that will minimize T and not with respect to the files that will fill IM optimally at a current stage.

The main loop of the algoritlun presented in Figs. 4a,b looks as follows. While there are clients which have not downloaded all files required by them:

a) Find the MUQC (box 14)

b) Wait until IM has enough space to take in a file f from files which are required by MUQC and not yet inserted in IM (box 16). The file f is selected (box 18) by some criteria defined later.

c) Insert f into IM (box 20). For each client requiring the file f, insert f into the client's queue of files to be downloaded from the IM (box 22).

The waiting time in step b) determines the efficiency of the algorithm. Defining $W$ as the sum of all waiting time in step, the overall download time $T$ would be $T_0 + W$. So the lower is the waiting time $W$ the closer is the result would

be to $T_0$.

In step b) the algorithm waits for the first point in time when IM has enough space to take one or more files from the files required by MUQC. The choice of "first" stems again from the greedy nature of the algorithm; it always strives to minimize the waiting time, even if some extra waiting now would result in an overall better T later.

The selection criteria in step b) could be, for example, f with the largest number of clients (in addition to being small enough to fit in IM). This is to prefer a parallel download activity above a serial download activity.

The algorithm starts at a system bootstrap, with an empty IM and with no registered clients. The algorithm is activated whenever at least one new client registers or an existing client un-registers (box 10), or whenever a client finishes downloading a file (box 26). The algorithm halts when the system shuts down (i.e., all the files of the plurality are downloaded to all the clients which required these files - box 32).

When a client registers/un-registers, a number of data bases among those mentioned above should be changed (box 12).

Concurrent downloading of the files to the clients from the IM is considered as an on-going operation (box 24).

When a client finishes downloading a file, one or more data bases are also to be changed (see also logical operators 28, 30, 32), which may lead to making further solutions in the downloading process.

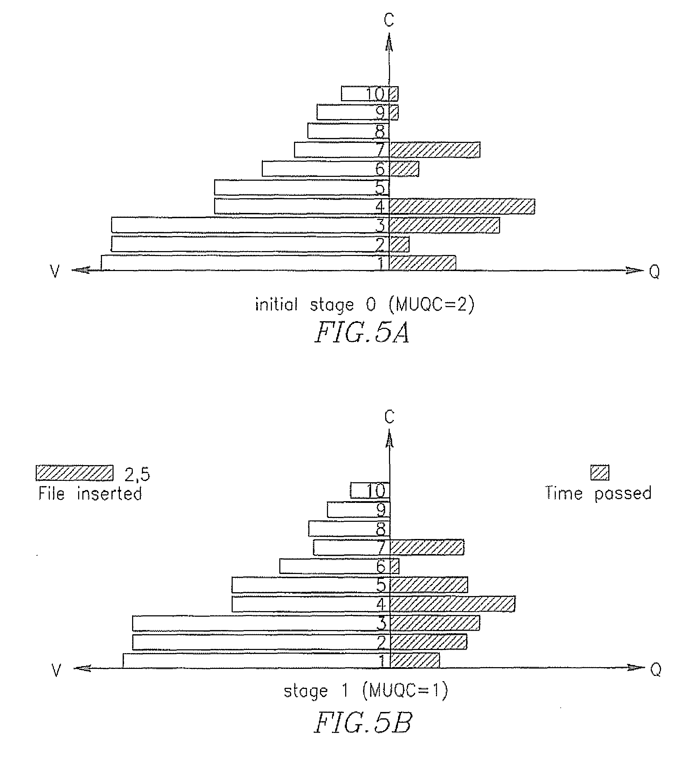

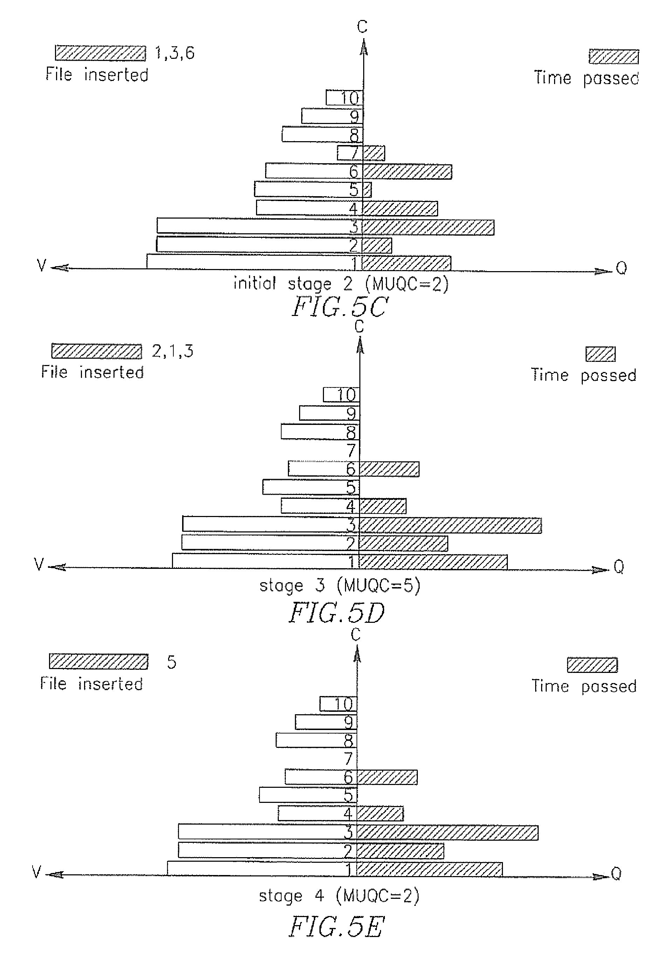

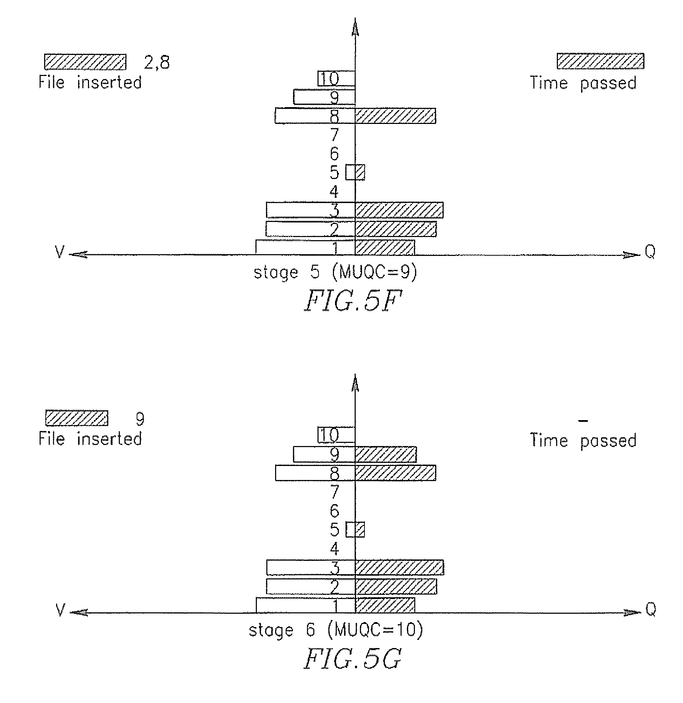

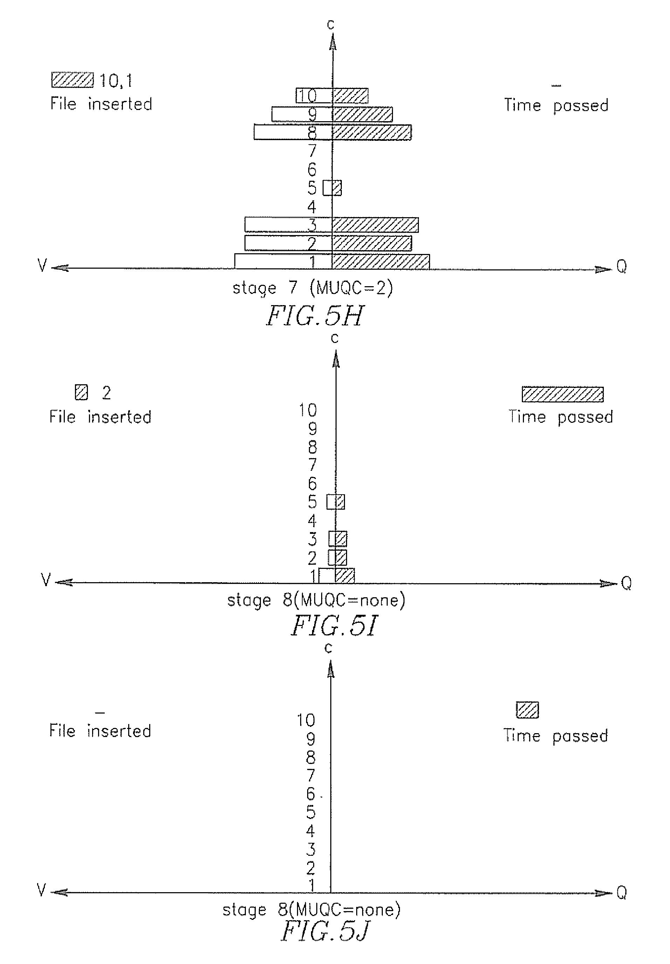

**Figs. 5a to 5j** present a so-called walkthrough example illustrating successive stages of changing the downloading status of a group of ten clients, while being "fed" by files from an intermediate memory having a limited capacity and being gradually fulfilled according to the proposed principle.

Every next stage indicates the change which took place upon some time period Δt had passed. The time period Δt is indicated as a box in the upper right corner of the corresponding figure, and is measured by the volume of data downloaded from the queues during that period of time. One may notice, that stage 1 (Fig. 5b) takes place after stage 0, upon the time Δt 1, and that all the queued volumes Q of stage 1 ( to the right from the vertical axis C) have become shorter than those of stage 0 by the same volume Δt 1.

It should also be noted that in this example, at stages 1-7, a new file is inserted in the intermediate memory, and this fact is indicated by a box shown at the upper left corner of the corresponding drawing. Numbers near the box indicate which clients require the inserted file. At stage 1 (Fig. 5b), the inserted file is required by clients 2 and 5. One may note that, at stage 2 (Fig. 5c), the volume of the file inserted into IM at stage 1 has been added to the queues (Q) of clients 2 and 5.

**Tables 1 and 2** represent results of two exemplary simulations of implementing the proposed method.

The simulations were done with four clients. In each setup a different set of files were assigned to each client. For each setup the algorithm was run with different IM sizes in order to put the algorithm in extreme conditions.

In the setups below the names of the files reflect the sizes of the files. So clients 1 and 2 could share the same file in one setup (e.g., "100") and have a slightly different size files in another setup (e.g., "100" and "101"). In our example, all the clients are supposed to have similar downloading rates (equal to 1 "rate unit").

## Scenario 1

In this scenario clients share many files. For example, file "133" is shared by clients 1,2 and 3. The overall download volume from the server (containing all system files) to IM is 720, while the overall download volume from IM to the clients is 1579.

## Setup

In this setup client c3 is the constraining client with a download volume of 531. Clients 2, 1 and 4 have a download volume of 494, 435 and 119 respectively.

```
{"133",        "103",        "83", "73", "43",                        0}; // C1
{"133",              "93", "83", "73", "43", "33", "23", "13", 0}; // C2
{"133","123","103",        "83",        "43", "33",        "13", 0}; // C3
{                                  "73",        "33",        "13", 0}; // C4
```

## Result

When the algorithm was applied with IM=133 (the size of the largest file in the system) it completed to download all files in 697 time units (with 166 idle units). With IM=200 the algorithm completed in 624 time units (see Table 1 below). The total size of the system file in this case is 133+123+103+93+83+73+43+33+23+13=720. So obviously, if the IM size is 720, the algorithm should complete in 531 units (the optimal download time). However, already with IM size = 289 (about two times the size of the largest file) the algorithm obtained the optimal result.

**Table 1**

| IM size | Download Time |
|---------|---------------|
| 133 | 697 (idle=166) |
| 200 | 624 (idle=93) |
| 250 | 574 (idle=43) |
| 289 | 531 (idle=0) |

## Scenario 2

In this scenario clients do not share files. For example, file "311" is used by client I, while another different file of a similar size, "312", is used by client 2.

## Setup

In this setup client c3 is the constraining client with a download volume of 531. Clients 2, 1 and 4 have a download volume of 486, 420 and 122 respectively. In this case the overall download volume from the server to IM is 1564, the same as the overall download volume from IM to the clients.

```
("131",        "101",        "81", "71", "41",                    0); // C1
("132",              "92", "82", "72", "42", "32", "22", "12", 0); // C2
("133","123","103",        "83",        "43", "33",        "13", 0); // C3
(                                "74",        "34",        "14", 0); // C4
```

## Result

In the previous example, the algorithm was run with IM size as low as 133 (the size of the largest file in the system). Unlike the previous scenario, the total size of the system file is much larger now (more than twice the size discussed in scenario 1). So obviously, with IM of size 1564 the algorithm could complete at 531 time units. However, already with the IM of size 346 (about three times the size of the largest file) the algorithm obtained the optimal result.

Table 2

| IM size | Download Time |
|---------|---------------|
| 133 | 1278 |
| 190 | 859 |
| 250 | 727 |
| 289 | 649 |
| 346 | 531 |

The optimal result (optimal time of download) can be estimated by comparing results of the proposed algorithm with results of an ultimate algorithm. The ultimate algorithm is a theoretical procedure which checks all combinations of the given sets of clients, sets of files and computes an optimum time by the method of exhaustion. One may simulate such an algorithm on a given set of clients, files and IM size, say by utilizing a knapsack approach. Alternatively, the optimum may be estimated by comparing how much time the clients are idle when operating according to the proposed algorithm, and when operating under another algorithm (say, the knapsack one).

Simulations performed by the Author allow considering the proposed method at least as effective as the knapsack approach (and in many cases even more effective), while being much simpler than the knapsack algorithm.

It should be appreciated that other versions of the above-described method might be proposed and are to be considered part of the invention whenever found within the scope of claims which follow.

**Claims**

1. A method for downloading a plurality of files to a group of clients from an outside source via an intermediate memory IM having a limited capacity insufficient for simultaneously storing all of said plurality of files, though sufficient for storing at least the greatest file of said plurality; the method provides downloading of files required by each specific client, to corresponding clients via said IM, and comprises:

   - monitoring a current condition of each of said clients to determine there-among a client SC maximally close to a starving condition, said SC being currently **characterized by** a maximal value of $(V-Q)K$, wherein
   $V$ is a remaining download volume being a volume of files out of said plurality of files, required by and not yet downloaded to a specific client,
   $Q$ is a queued download volume being a volume of files out of said plurality of files, required by the specific client and currently present in the intermediate memory IM,
   $K$ is a coefficient;
   - upon determining said client SC, inserting in the IM from the outside source at least one additional file required by said SC, if not already present in the IM and whenever a suitable space in the IM is available.

2. The method according to Claim 1, wherein said coefficient $K=I/R$, where R is a downloading rate of said specific client.

3. The method according to Claim 1 or 2, comprising inserting a single said additional file in the IM whenever a suitable space in the IM becomes available.

4. The method according to any one of the preceding claims, wherein the downloading of the files to the clients is performed substantially concurrently.

5. The method according to any one of the preceding claims, comprising the following preliminary steps:

   - registering clients of said group, wherein the registration includes obtaining information about clients and files required by each specific client,
   - creating working data bases for monitoring status of the clients, the files and the intermediate memory IM to enable control of the downloading process.

6. The method according to Claim 5, wherein the working data files include: a data base of the clients, a data base of the plurality of files, data bases of files required by each specific client, a data base of files currently inserted in the intermediate memory IM, a per file data base of clients requiring a specific file currently inserted in the IM; a per client data base of files required by each specific client, out of those currently inserted in the intermediate memory IM, a per client data base of files required by each specific client and not yet downloaded to the specific client.

7. The method according to any one of the preceding claims, wherein the step of inserting at least one additional file to the IM comprises:

   - checking whether any of the presently inserted files has already been downloaded to all clients requiring said file, and if in the affirmative, removing said file from the IM thereby freeing a space for additional files to be inserted; determining whether any additional file required by said SC can be inserted in the IM, and if in the affirmative, selecting and inserting a suitable file in the IM.

8. The method according to Claim 7, wherein an auxiliary criterion for selection the additional file to be inserted in the IM is the maximal possible number of the clients, in addition to the SC, also requiring said additional file.

9. A software product comprising computer implementable instructions and/or data for carrying out the method according to any one of the preceding claims.

10. A carrier medium comprising a software product according to claim 9.

11. A control processing unit capable of implementing the method according to any one of claims 1 to 10.

12. An intermediate memory IM for downloading via said IM a plurality of files to a group of clients from an outside source, said IM having a limited capacity and being provided with: the software product according to Claim 9 and/or the control processing unit according to Claim 11.

f(1)...f(m)

IM

Phase 1

Phase 2

C1...Ci...Cn

*FIG.1*

F

max

t1    t2    t3    t4

*FIG.2*

C

V    Q

10
9
8
7
6
5
4
3
2
1

*FIG.3*

START

REGISTERING /DEREGISTERING CLIENTS 1....i...n
AND FILES REQUIRED BY EACH CLIENT
— 10

CREATING /UPDATING NECESSARY DATA BASES
INCLUDING PER CLIENT COUNTERS (V1...Vi...Vn)
AND PER CLIENT QUEUES (Q1...Qi...Qn)
— 12

B

DETERMINING CLIENT i
(MUQC) HAVING MAXIMAL
$K*(Vi-Qi)$
14

DOES IM
HAVE ENOUGH SPACE TO
INSERT A FILE STILL REQUIRED
BY MUQC, IF NOT
ALREADY IN IM
?
— 16

N

Y

SELECT A SUITABLE FILE f
— 18

INSERT SUITABLE FILE f INTO IM
— 20

INSERT FILE f INTO QUEUES OF CLIENTS REQUIRING IT
— 22

A

*FIG.4A*

*FIG.4B*

initial stage 0 (MUQC=2)

*FIG.5A*

stage 1 (MUQC=1)

*FIG.5B*

File inserted 1,3,6

Time passed

initial stage 2 (MUQC=2)

*FIG.5C*

File inserted 2,1,3

Time passed

stage 3 (MUQC=5)

*FIG.5D*

File inserted 5

Time passed

stage 4 (MUQC=2)

*FIG.5E*

stage 5 (MUQC=9)

*FIG.5F*

stage 6 (MUQC=10)

*FIG.5G*

stage 7 (MUQC=2)

*FIG.5H*

stage 8(MUQC=none)

*FIG.5I*

stage 8(MUQC=none)

*FIG.5J*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05117386 A1

- CN 1567843 A

**Non-patent literature cited in the description**

- On resource allocation for multiple bearer services in UMTS supporting reconfiguration. **ABOU-JAOUDE, ROGER ; SIEMENS MOBILE ; DAWY, ZAHER ; MOHYELDIN, EIMAN ; LUO, JIJUN ; DILLINGER, MARKUS.** Proceedings of 5th World Wireless Congress. Delson Group Inc, 2004, 652-656